Europäisches Patentamt

European Patent Office

Office européen des brevets

(11) Publication number: **0 338 336**
**A1**

## (12) EUROPEAN PATENT APPLICATION

(21) Application number: 89106082.4

(22) Date of filing: 06.04.89

(51) Int. Cl.⁴: **C08L 95/00 , E04D 5/10 , B32B 11/00 , //(C08L95/00, 53:02,23:00),(C08L95/00,23:00)**

(30) Priority: 07.04.88 IT 2011288

(43) Date of publication of application:
25.10.89 Bulletin 89/43

(84) Designated Contracting States:
**AT BE DE ES FR GB NL**

(71) Applicant: AUSIMONT S.r.l.
31, Foro Buonaparte
I-20100 Milano(IT)

(72) Inventor: **Ciaccia, Vittorio**
26, Via Carri
I-44100 Ferrara(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

(54) Waterproofing membranes based on bitumen.

(57) Waterproofing sheets or membranes comprising a support composed of or comprising a vulcanized polyolefinic rubber enclosed in a sandwich-type structure between two layers of bituminous composition selected from:

       (1) compositions comprising, by weight,

        (A) 60-90% of bitumen

        (B) 3.5-20% of EPM or EPDM rubber

        (C) 3-20% of HD polyethylene

        (D) 1.5-10% of EVA copolymer

        (E) 0-10% of isotactic polypropylene

        (F) 0-20% of inorganic filler;

       (2) compositions comprising, by weight,

        (A) 60-90% of bitumen

        (B) 40-10% of elastomeric styrene-butadiene copolymer

        (C) 0-20% of amorphous polypropylene

        (D) 0-20% of inorganic filler.

EP 0 338 336 A1

## WATERPROOFING MEMBRANES BASED ON BITUMEN

The present invention relates to waterproofing membranes based on bitumen.

It is known that waterproofing sheets suitable, e.g. for use in roofings for buildings and industrial coverings as well as coverings for water basins and landfills, may be obtained by impregnation of felts, fabrics or non-woven fabrics made of natural or synthetic fibres with bitumen in the molten state.

The latter may be bitumen of the distilled type, modified by the addition of certain amounts of amorphous plastomeric olefinic homopolymers and copolymers, such as polypropylene, of elastomeric, thermoplastic ethylene/propylene copolymers, or styrene/butadiene/styrene copolymers.

The addition of such materials makes it possible to obtain bitumen which show good mechanical and elastic properties. However, with the supports used so far (generally of fiberglass or of fibres of polyester resins), which typically have extremely poor elastic properties, the elastic characteristics of the bituminous component remain unexploited, so that substantially unelastic final structures are obtained. Furthermore, the supports of the above type show a poor resistance to ageing and do not display any barrier properties for water once the layer of bitumen loses its continuity due to stress and yielding of the structures and of the waterproofing materials or owing to an incorrect application.

A new type of waterproofing sheets or membranes on the basis of bitumen has been found which overcomes the above described drawbacks and moreover is easy to prepare and apply.

Such sheets or membranes, which are the object of the present invention, are composed of, or comprise, a sheet of a vulcanized elastomeric copolymer and/or terpolymer, respectively of the ethylene/propylene or ethylene/propylene/diene (EP or EPDM rubber) type enclosed, under formation of a sandwich-type sturcture, between two layers, or surfaces, of an elastomer containing asphalt or bitumen composition selected from:

(1) compositions comprising, by weight:

(A) from 60 to 90% of bitumen,

(B) from 3.5 to 20% of elastomeric ethylene/propylene copolymer and/or ethylene/propylene/diene terpolymer containing from 30 to 45% by weight of combined (total) propylene and from 0 to 10% by weight of combined (total) diene monomer, having a Mooney viscosity [ML (1 + 4) at 100° C] of higher than 5, preferably of from 8 to 50, and most preferably of from 40 to 45;

(C) from 3 to 12% of polyethylene having a density of from 0.96 to 0.98 g/cm$^3$, a M.I. (melt index) of greater than 5, preferably of from 10 to 30, and optionally containing up to 10% by weight of copolymerized propylene units;

(D) from 1.5 to 10% of an ethylene/vinyl acetate copolymer containing from 60 to 95% by weight of ethylene units and having a M.I. of higher than 0.1, preferably of from 0.5 to 200;

(E) from 0 to 10% of isotactic polypropylene having a M.I. of greater than 1, preferably of from 5 to 15;

(F) from 0 to 20% of inorganic filler;

(2) compositions comprising, by weight:

(A) from 60% to 90% of bitumen;

(B) from 40 to 10% of an elastomeric styrene-butadiene copolymer;

(C) from 0 to 20% of amorphous polypropylene;

(D) from 0 to 20% of inorganic filler.

Examples of preferred inorganic fillers suitable for use in the above compositions (1) and (2) are Kaolin, calcium carbonate and silica.

The thickness of the rubber in the waterproofing membranes according to the present invention is not critical and depends on the intended use of the membranes. For the majority of applications said thickness will be within the range of from 0.5 to 1.0 mm.

The composition of the elastomeric copolymers and terpolymers which constitute the sheet enclosed between the two layers of bitumen, according to the present invention, is not critical.

In general, such copolymers comprise from 25 to 50% by weight of propylene units, and from 0 to 10% by weight of units deriving from copolymerized dienic monomers.

Examples of said dienic monomers are ethylidene-norbornene, dicyclopentadiene, 1,4-hexadiene, cyclohexadiene, butadiene etc.

Such copolymers and terpolymers, as well as the elastomeric EPM copolymers and EPDM terpolymers

2

contained in the bituminous composition (1) can be prepared according to known methods. Among such copolymers and terpolymers, those obtained by means of high-yield catalysts based on titanium compounds, such as disclosed, e.g., in US-A-4,013,823 have proved to be particularly suitable.

Examples of dienic monomers contained, as combined monomeric units, in the elastomeric terpolymers of bituminous composition (1) are those already disclosed in connection with the terpolymers which consitute the rubber sheet.

The butadiene-styrene elastomeric copolymers present in the asphalt composition (2) preferably comprise from 10 to 35% styrene and can be of the styrene-butadiene type or of the styrene-butadiene-styrene type, and may be either linear or star-shaped. Such copolymers are well known in the art. Methods for their manufacture are disclosed, for instance, in US-A-3,281,383, 3,637,554, 3,639,517, 4,086,298, 4,180,530 and 4,221,884, in FR-A-2,093,581 and in GB-A-1,130,770.

the surface of the rubber sheet can be smooth but preferably it is rough or embossed with a cloth-like pattern, in order to promote adhesion to the bitumen layers.

The preparation of the membranes can be carried out by means of any of the methods used for surface coatings; it can be accomplished, e.g., by dipping the vulcanized rubber sheet into the liquid bituminous composition, thereafter causing the sheet to pass through two thickness-control rollers and then cooling it. According to an alternative procedure said membranes can be prepared by calendering, with the liquid bituminous composition being fed between two rollers of a calender and the vulcanized rubber sheet being interposed between two layers of said bituminous composition.

The following examples are to illustrate the present invention, without being a limitation of the scope thereof.

## EXAMPLE 1

By using an EPDM elastomer composed of, by weight, 45% of propylene, 53% of ethylene and 2% of ethylidene norbornene, having a Mooney viscosity [ML $(1+4)$ at $100°C$] of 40, and employing a conventional vulcanization formulation based on sulfur and accelerators, a vulcanized sheet having embossed surfaces was prepared. Said sheet had a thickness of 0.6 mm and showed the following characteristics:

| | | |
|---|---|---|
| Tensile strength (MPa) | 9 | (ASTM D412) |
| Elongation at break (%) | 300 | (ASTM D412) |
| Modulus 200% (MPa) | 6.8 | (ASTM D412) |
| Tension set 200% (%) | 9 | (ASTM D412) |
| Shore A hardness (Points) | 55 | |
| Tear strength (N/mm) | 40 | (ASTM D624/C) |
| Brittleness temperature ($°C$) | -45 | (ASTM D2137) |
| Ozone resistance | no breakages | (ASTM D1149) |

Said sheet was dipped into a tank containing a liquid bituminous composition maintained at $180°C$ and composed of a mixture of:

| | parts by weigth |
|---|---|
| - Distilled bitumen of 180/200 type | 75 |
| - Ethylene/propylene/ethylidene norbornene-terpolymer (45% $C_3$; 52% $C_2$; Mooney viscosity: 48) | 7.5 |
| - Ethylene/vinyl acetate copolymer, (18% vinyl acetate; M.I. = 2) | 3.0 |
| - High density polyethylene (d = 0.965 g/cm$^3$; M.I. = 28) | 4.5 |
| - Mineral filler powder (calcium carbonate) | 10 |

The above mixture had a Brookfield viscosity at $180°C$ of 10,000 cps and showed the following characteristics:

3

| Ring-Ball (°C) | 125 | (UNI 8202) |
|---|---|---|
| Penetration at 25°C (1/mm) | 30 | (UNI 8202) |
| Penetration at 60°C (1/mm) | 130 | (UNI 8202) |
| Flexibility (°C) | -10 | (UNI 8202) |
| Tensile Strength (kg/cm²) | 5 | (UNI 8202) |
| Elongation at Break (%) | 200 | (UNI 8202) |

Thus, a bituminous membrane was obtained which, after passage through thickness-control rollers and subsequent cooling, showed the following characteristics:

| - Thickness | 4.0 mm | (UNI 8202) |
|---|---|---|
| - Flexibility at -5°C | no breakages | (UNI 8202) |
| - Longitudinal tensile strength (kg/5 cm) | 87 | (UNI 8202) |
| - Transverse tensile strength (kg/5 cm) | 80 | (UNI 8202) |
| - Longitudinal elongation at Break (%) | 200 | (UNI 8202) |
| - Transverse elongation at Break (%) | 180 | (UNI 8202) |
| - Impermeability to water | absolute | (UNI 8202) |

EXAMPLE 2

The procedure of Example 1 was repeated, with the exception that the liquid bituminous mass was applied by causing it to pass, at 160°C, through the cold rollers of a calender, with the vulcanized rubber sheet being interposed between two layers of said liquid bituminous mass.

The properties of the so obtained membrane were analogous to those of the membrane of Example 1.

EXAMPLE 3

The procedure of Example 1 was repeated, using a sheet of EPM rubber (68% by weight of ethylene) having a Mooney viscosity [ML (1 + 4) at 100°C] of 50.

Said sheet was press-vulcanized by means of a conventional vulcanization formulation based on sulfur, peroxides and co-agents. After the vulcanization the sheet showed the following characteristics:

| - Thickness (mm) | 0.7 | |
|---|---|---|
| - Tensile strength (MPa) | 10.0 | (ASTM D412) |
| - Elongation at Break (%) | 250 | (ASTM D412) |
| - Modulus 200% (MPa) | 7.0 | (ASTM D412) |
| - Tension set 200% (%) | 7 | (ASTM D412) |
| - Shore A hardness (Points) | 55 | |
| - Tear strength (N/mm) | 50 | (ASTM D624/C) |
| - Brittleness temperature (°C) | -45 | (ASTM D2137) |
| - Ozone resistance | no breakages | (ASTM D1149) |

The bituminous composition used was that of Example 1.
The characteristics of the thus obtained membrane were as follows:

4

| - Flexibility at -5°C | no breakages | (UNI 8202) |
|---|---|---|
| - Longitudinal tensile strength (kg/5 cm) | 80 | (UNI 8202) |
| - Transverse tensile strength (kg/5 cm) | 75 | (UNI 8202) |
| - Longitudinal elongation at Break (%) | 170 | (UNI 8202) |
| - Transverse elongation at Break (%) | 170 | (UNI 8202) |
| - Impermeability to water | absolute | (UNI 8202) |

## EXAMPLE 4

The cured rubber sheet described in Example 1 was dipped in an asphalt composition, at 180°C, consisting of:

| | parts by weight |
|---|---|
| - Bitumen 180/200 | 78 |
| - Styrene/butadiene/styrene star copolymer (containing 30% b.w. styrene; M.I. = 1.6 dl/g) | 12 |
| - calcium carbonate powder | 10 |

The asphalt composition had a Bookfield viscosity at 180°C of 9,000 cps and showed the following characteristics:

| Ring and ball (°C) | 110 |
|---|---|
| Penetration at 25°C (1/mm) | 60 |
| Penetration at 60°C (1/mm) | 180 |
| Flexibility (°C) | -20 |
| Breaking load (kg/cm$^2$) | 7 |
| Elongation at Break (%) | greater than 1,000 |

Thus, a bituminous membrane was obtained which, after passage through thickness-control rollers and subsequent cooling, showed characteristics similar to that of Example 1.

## Claims

1. Waterproofing sheets or membranes, comprising a sheet of a vulcanized elastomeric ethylen/propylene copolymer and/or ethylene/propylene/diene terpolymer enclosed, under formation of a sandwich-type structure, between two layers or surfaces of bituminous composition selected from:
   (1) compositions comprising, by weight:
(A) from 60 to 90% of bitumen;
(B) from 3.5 to 20% of elastomeric ethylene/propylene copolymer and/or ethylene/propylene/diene terpolymer containing from 30 to 45% by weight of combined propylene and from 0 to 10% by weight of combined diene monomer and having a Mooney viscosity [ML (1 + 4) at 100°C] of higher than 5;
(C) from 3 to 12% of polyethylene, optionally containing up to 10% by weight of copolymerized propylene units, having a density of from 0.96 to 0.98 g/cm$^3$ and a M.I. of greater than 5;
(D) from 1.5 to 10% of ethylene-vinylacetate copolymer containing from 60 to 95% by weight of ethylene units and having a M.I. of higher than 0.1;
(E) from 0 to 10% of isotactic polypropylene having a M.I. of greater than 1;
(F) from 0 to 20% of inorganic filler;
   (2) compositions comprising, by weight:
(A) from 60 to 90% of bitumen;
(B) from 40 to 10% of an elastomeric styrene-butadiene copolymer;

(C) from 0 to 20% of amorphous polypropylene;
(D) from 0 to 20% of inorganic filler.

2. Waterproofing sheets or membranes according to claim 1, wherein component (B) of composition (1) has been obtained by polymerization of the monomers in the presence of high-yield catalysts based on titanium compounds.

3. Waterproofing sheets or membranes according to anyone of claims 1 and 2, wherein component (B) of composition (1) has a Mooney viscosity
[ML (1 + 4) at 100$^\circ$C]
of from 40 to 45.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 487 884 (GERLAND ETANCHEITE S.A.) --- | | C 08 L 95/00<br>E 04 D 5/10<br>B 32 B 11/00 //<br>(C 08 L 95/00 |
| A | EP-A-0 204 157 (AUSIMONT S.p.A) --- | | C 08 L 53:02<br>C 08 L 23:00 ) |
| A | EP-A-0 009 432 (COMPOSANTS INDUSTRIALISES DU BATIMENT) ----- | | |

TECHNICAL FIELDS
SEARCHED (Int. Cl.4)

C 08 L
E 04 D
B 32 B

The present search report has been drawn up for all claims

| Place of search | Date of completion of the search | Examiner |
|---|---|---|
| THE HAGUE | 14-07-1989 | BUSCAGLIONE Y. |

EPO FORM 1503 03.82 (P0401)